# EUROPEAN PATENT SPECIFICATION

(11) **EP 1 561 566 B1**
(45) Date of publication and mention of the grant of the patent: **15.09.2010**
(21) Application number: 05005447.7
(22) Date of filing: 10.08.2000
(51) Int. Cl.: B29C 65/08, B29C 53/52

(54) **Ultrasonic sealing device for packaging material**
Ultraschallschweissvorrichtung für Verpackungsmaterial
Dispositif de scellement à ultrason destiné aux matières d'emballage

(43) Date of publication of application: 10.08.2005
(62) Divisional of application: 00950061.2
(73) Proprietor: Furukawa Mfg. Co., Ltd., Shinagawa-ku, Tokyo 140-0014 (JP)
(72) Inventor: Uneda, Noriaki, Hiroshima 723-0014 (JP)
(74) Representative: Engelhardt, Harald

(56) References cited:
- FR-A- 2 313 186
- FR-A- 2 571 639
- US-A- 4 410 383
- US-A- 4 950 345

## Description

### Technical Field

The present invention relates to a device not only for rounding a belt-like film into a tube along its length direction, but for melding overlapped edges on both sides of said tubular film by ultrasonic vibration in order to form a plurality of packaging bags.

### Background Art

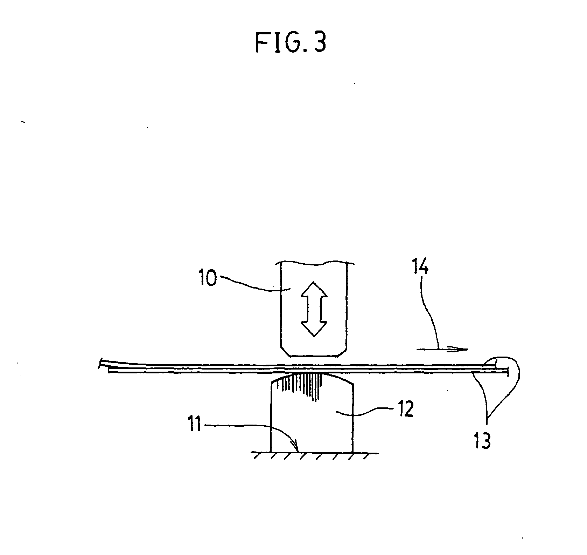

In the conventional device which effects melding of overlapped parts of both side edges of a film rounded to be tubular by heat generated by ultrasonic vibration, as shown in Fig. 3, two overlapping sheets of film 13 are moved in the direction of arrow 14 between a vertically vibrating hammer 10 and an anvil 12 securely held on the frame 11, thereby to continuously meld the film 13 by vibration heat induced by the hammer. However, because of subtle variations in the thickness of the aforementioned film 13, its melding strength varies from area to area, threatening to cause air leak when vacuum packaging is carried out, for example.

### Disclosure of Invention

It is therefore an object of this invention to form a tubular film having a uniform strength by averaging the vibratory impact force to be applied onto the film.

An apparatus to apply vibrations to thermo fusible sheet articles is known form FR 2 313 186 A. This apparatus contains an anvil that is resiliently supported in a seating by a spring or other resilient means. The spring may be fitted in a recess which is formed in the body of the anvil. In order to ensure a better bearing action, a ball is positioned between the spring and the bottom of the seating. To regulate the height of the anvil, the pressure of the spring can be adjusted by a screw or any other suitable means. The anvil is thus resiliently urged in a direction out of its seating and towards the hammer of the apparatus and a sharp abutment of the anvil presses against the hammer.

A device known from FR 2 571 639 A provides a plurality of small anvils that are in contact with spring means, whereby a plate is placed between each anvil and the corresponding spring means. These spring means, which can also be adjusted, push the anvils against the hammer.

According to US 4 950 345 A a back-up pad is provided over an anvil surface of a back-up plate, and between the anvil surface and a sealing surface of a sealing die, in an apparatus for forming seals between layers of film material. The back-up pad has a slip surface on one side thereof and a spring surface on an opposite side thereof, the slip surface opposing the sealing face of the die so that the layers of film material pass between the sealing die and the back-up pad during seal formation. The spring surface is comprised of a plurality of outwardly extending resilient spring loops that act against the back-up plate during seal formation, the spring loops resiliently urging the layers of film material against the sealing face to effect seal formation between the film layers while cushioning the film layers to prevent damage to the film layers due to drag between layers and the die face.

Another apparatus for manufacturing tubular shaped thermoplastic members using ultrasonic welding is known from US 4 410 383 A. This apparatus also contains resiliently mounted anvil members.

The present invention provides a sealing device comprising a means for moving a belt-like film along the inner surface of a tubular plate so folded as to form a continuous slit between both side edges thereof, thereby to form said film into a continuous tube, following the sectional profile of this tubular plate, wherein one end of a spring piece is fixedly set to a base block immovably held on one of the sides sandwiching the aforementioned slit, and an anvil is formed on the other end of said spring piece, so that clasped-hands like edges of the tubular film which are thrusted out from the aforementioned anvil may be melded by the cooperation of the aforementioned anvil and a movable hammer which applies ultrasonic vibratory impact on said anvil.

### Brief Description of Drawings

Fig. 1 is a side view of a sealing device according to the invention;
Fig. 2 is a sectional view of the device taken along the line IV-IV in Fig. 1;
Fig. 3 is an explanatory diagram showing a prior art.

### Best Mode for Carrying Out the Invention

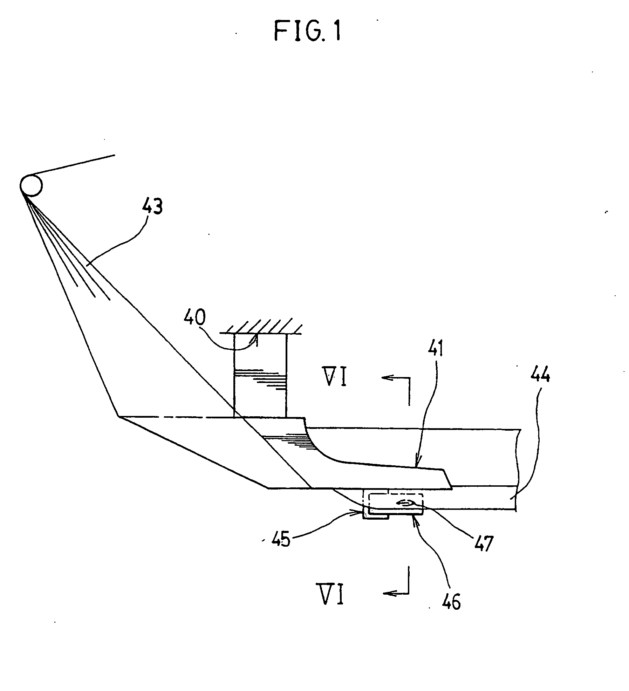

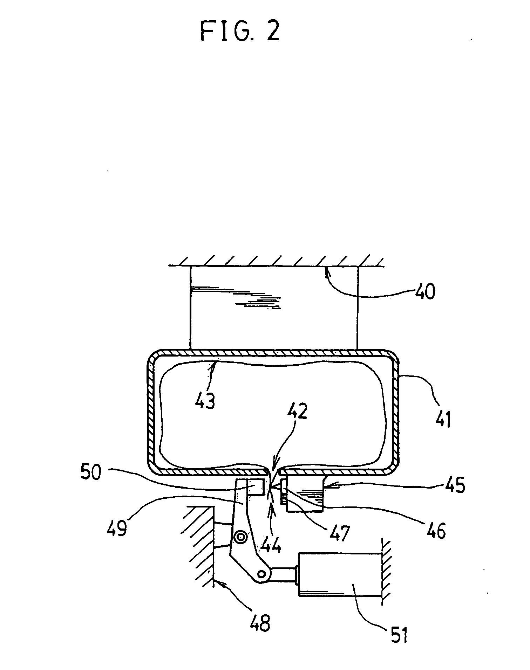

As shown in Fig. 1 and 2, a tubular plate 41 affixed to a frame 40 has a contiguous slit 42 formed along the center line of the bottom thereof. A belt-like film 43 is led down from above, and its two side edges 44 are rounded, while being thrusted out in the form of clasped hands through the aforementioned slit 42.

On the bottom surface of the aforementioned tubular plate, there is hung a base block 45 from one of the sides sandwiching the aforementioned slit 42. Said base block is affixed with an elongated rectangular spring piece 46 affixed at one end thereof, and an anvil 47 is bulged out from said spring piece at the other end thereof. On the other hand, a hammer 50 of a bell crank 49 supported on the frame 48 is placed face to face with the aforementioned anvil 47, and the aforementioned bell crank is coupled to a vibrator 51. When vibration is acted on the anvil through the hammer 50 by the power from the aforementioned vibrator 51, the clasped-hands shape portion of the film thrusted out through the slit 42 is moved while being continuously melded.

It should be noted that the objective may alternatively be achieved by securing the aforementioned base block 45 on the frame in an immovable state instead of on the tubular plate 41.

Further, the spring piece may be made by using other materials than those specified exclusively for springs, as far as the used material has such an elasticity that the spring piece would not be deformed by the vibration amplitude of the hammer, because the amplitude is very small.

## Claims

1. A sealing device comprising a means for moving a belt-like film (43) along the inner surface of a tubular plate (41) so folded as to form a continuous slit (42) between both side edges (44) thereof, thereby to form a film (43) into a continuos tube, following the sectional profile of the tubular plate (41),
**characterized in that**
one end of a spring piece (46) is fixedly set to a base block (45) immovably held on one of the sides sandwiching the aforementioned slit (42), and an anvil (47) is formed on the other end of said spring piece (46), so that clasped-hands like edges of the tubular film (43) which are thrusted out from the aforementioned slit (42) may be melded by the cooperation of the aforementioned anvil (47) and a movable hammer (50) which applies ultrasonic vibratory impact on said anvil (47).

2. Sealing device according to claim 1, **characterized in that**
that the base block (45) is fixedly set on the tubular plate (41) on one of the sides sandwiching the slit (42) and the spring piece (46) is supported on the tubular plate (41).

## Patentansprüche

1. Versiegelungsvorrichtung mit einem Mittel zum Bewegen einer bandförmigen Folie (43) entlang der Innenfläche einer röhrenförmigen Platte (41), die so gefalzt ist, dass sie einen durchgehenden Schlitz (42) zwischen ihren beiden Seitenrändern (44) bildet, wodurch die Folie (43) zu einem durchgehenden Schlauch geformt wird, der dem Profilquerschnitt der röhrenförmigen Platte (41) folgt,
**dadurch gekennzeichnet, dass**
ein Ende eines Federteils (46) fest an einem Basisblock (45) positioniert ist, der auf einer der Seiten unbeweglich gehalten wird, die zwischen sich den oben genannten Schlitz (42) bilden, und ein Amboss (47) am anderen Ende des Federteils (46) gebildet ist, so dass die aus dem oben genannten Schlitz (42) vorragenden, ineinander verschränkten Ränder der schlauchförmigen Folie (43) durch Zusammenwirken des oben genannten Ambosses (47) und eines beweglichen Hammers (50), der den Amboss (47) mit Ultraschallschwingstößen beaufschlagt, miteinander verschmolzen werden.

2. Versiegelungsvorrichtung nach Anspruch 1, **dadurch gekennzeichnet, dass** der Basisblock (45) an der röhrenförmigen Platte (41) auf einer der zwischen sich den Schlitz (42) bildenden Seiten fest angeordnet ist und das Federteil (46) an der röhrenförmigen Platte (41) gestützt wird.

## Revendications

1. Dispositif de scellement comprenant un moyen pour déplacer un film de type courroie (43) le long de la surface interne d'une plaque tubulaire (41) pliée de manière à former une fente continue (42) entre les deux bords latéraux (44) de celle-ci, pour ainsi former un film (43) en forme de tube continu, suivant le profil en coupe de la plaque tubulaire (41),
**caractérisé en ce qu'**
une extrémité d'un élément de ressort (46) est attachée fixement à un bloc de base (45) retenu de manière immobile sur l'un des côtés prenant en sandwich ladite fente (42), et une enclume (47) est formée sur l'autre extrémité dudit élément de ressort (46), de sorte que des bords du film tubulaire (43), à la manière de mains serrées, qui sont repoussés hors de ladite fente (42), puissent être liés par la coopération de ladite enclume (47) et d'un marteau mobile (50) qui applique un impact vibratoire ultrasonique sur ladite enclume (47).

2. Dispositif de scellement selon la revendication 1, **caractérisé en ce que** le bloc de base (45) est attaché fixement à la plaque tubulaire (41) suer l'un des côtés prenant en sandwich la fente (42) et l'élément de ressort (46) est supporté sur la plaque tubulaire (41).
